# EUROPEAN PATENT APPLICATION

(11) **EP 4 804 326 A1**
(43) Date of publication of application: **09.09.2026**
(21) Application number: 24885356.6
(22) Date of filing: 03.10.2024
(51) Int. Cl.: H01M 50/583, H01M 10/052, H01M 10/0587, H01M 50/107, H01M 50/119, H01M 50/152, H01M 50/474, H01M 50/533, H01M 50/534, H01M 50/538

(54) **CYLINDRICAL BATTERY**

(30) Priority: 31.10.2023 JP 2023186990
(71) Applicant: Panasonic Intellectual Property Management Co., Ltd., Kadoma-shi, Osaka 571-0057 (JP)
(72) Inventor: HARAGUCHI, Shin, Kadoma-shi, Osaka 571-0057 (JP)
(74) Representative: Eisenführ Speiser
(86) International application number: PCT/JP2024/035437
(87) International publication number: WO 2025/094581

(57) **Abstract**

This cylindrical battery comprises: a winding-type electrode body (14); an outer can that has a bottomed cylindrical shape and that accommodates the electrode body (14); and a sealing body that closes the opening of the outer can, wherein a plurality of positive electrode leads connected to a positive electrode (11) of the electrode body (14) are included. The plurality of positive electrode leads include a main lead (20a) and two or more sub leads (20b, 20c). The main lead (20a) is connected to the sealing body, and the sub leads (20b, 20c) are connected to the main lead (20a) at a location away from the connection part between the main lead (20a) and the sealing body.

## Description

### TECHNICAL FIELD

The present disclosure generally relates to a cylindrical battery, and more particularly relates to a cylindrical battery comprising an electrode assembly including a plurality of positive electrode leads.

### BACKGROUND ART

In general, a cylindrical battery comprises a winding-type electrode assembly, a bottomed cylindrical housing can that contains the electrode assembly, and a sealing assembly that closes an opening portion of the housing can, and has a structure in which a positive electrode lead extending from a positive electrode of the electrode assembly is connected to the sealing assembly or the housing can. In recent years, cylindrical batteries have been widely used for applications that require high capacity, high power, high durability, and the like, such as on-vehicle use and power storage use. In order to improve output characteristics of the batteries, there is also proposed a cylindrical battery that comprises a plurality of positive electrode leads each connecting the positive electrode and the sealing assembly (for example, refer to PATENT LITERATURE 1)

### CITATION LIST

### PATENT LITERATURE

PATENT LITERATURE 1: Japanese Unexamined Patent Application Publication No. 2001-176489

### SUMMARY

Incidentally, with a cylindrical battery, there is a possibility that, in the case where an external short circuit occurs in the state of charging of the battery and the similar case, a large current is applied to the electrode assembly and causes abnormal heat generation of the electrode assembly. In particular, with a cylindrical battery that comprises a plurality of positive electrode leads, such application of a large current tends to continue upon occurrence of abnormality, and it is inferred that the amount of generated heat becomes large.

A cylindrical battery according to the present disclosure is a cylindrical battery, comprising: a winding-type electrode assembly; a bottomed cylindrical housing can that contains the electrode assembly; and a sealing assembly that closes an opening portion of the housing can, the cylindrical battery including a plurality of positive electrode leads connected to a positive electrode of the electrode assembly, wherein the plurality of positive electrode leads include a main lead and two or more subleads, the main lead is connected to the sealing assembly, and the subleads are connected to the main lead at a position separate from a connected portion of the main lead and the sealing assembly.

According to the cylindrical battery according to the present disclosure, in the battery that comprises the electrode assembly including the plurality of positive electrode leads, electric connection of the electrode assembly and an external circuit can be quickly disconnected upon occurrence of abnormality. Therefore, heat generation of the electrode assembly upon occurrence of abnormality can be restrained.

### BRIEF DESCRIPTION OF DRAWINGS

FIG. 1 is a sectional view of a cylindrical battery which is an example of embodiments.
FIG. 2 is a perspective view of an electrode assembly which is an example of the embodiments.
FIG. 3 is a perspective view of an electrode assembly which is another example of the embodiments.
FIG. 4 is a perspective view of an electrode assembly which is another example of the embodiments.
FIG. 5 is a perspective view of an electrode assembly which is another example of the embodiments.
FIG. 6 is a perspective view of an electrode assembly which is another example of the embodiments.

### DESCRIPTION OF EMBODIMENTS

Embodiments of a cylindrical battery according to the present disclosure will be described in detail with reference to the drawings.

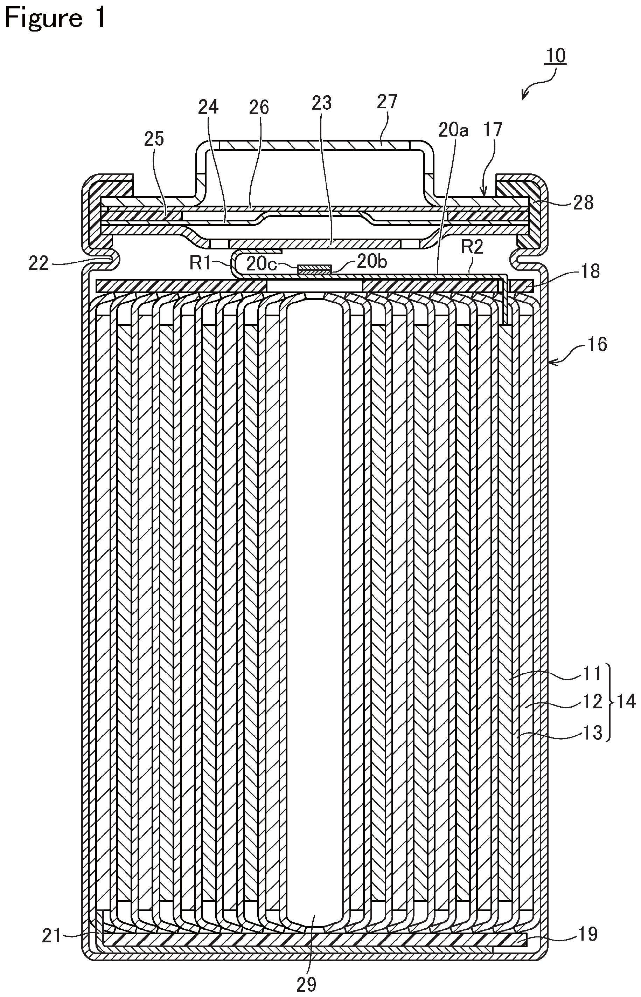

FIG. 1 is a sectional view of a cylindrical battery 10 which is an example of the embodiments. As shown in FIG. 1, the cylindrical battery 10 comprises a winding-type electrode assembly 14, an electrolyte, a bottomed cylindrical housing can 16 that contains the electrode assembly 14 and the electrolyte, and a sealing assembly 17 that closes an opening portion of the housing can 16. The electrode assembly 14 has a positive electrode 11, a negative electrode 12, and separators 13, and has a winding structure in which the positive electrode 11 and the negative electrode 12 are wound via the separators 13 into a spiral shape. Hereafter, the sealing assembly 17 side of the battery is regarded as being upward, and a bottom side of the housing can 16 is regarded as being downward for convenience of description.

The positive electrode 11, the negative electrode 12, and the separators 13 constituting the electrode assembly 14 each are a belt-shaped long strip-shaped component, and are alternately stacked in a radial direction of the electrode assembly 14 by being wound into the spiral shape. The negative electrode 12 is formed to have a dimension larger by a certain size than the positive electrode 11 in order to prevent precipitation of lithium. Namely, the negative electrode 12 is formed to be longer than the positive electrode 11 in a longitudinal direction and a width direction. Two separators 13, for example, are arranged so as to cause the positive electrode 11 to be interposed therebetween which separators 13 each are formed to have a dimension at least larger by a certain size than the positive electrode 11. The electrode assembly 14 has positive electrode leads connected to the positive electrode 11 by welding or the like, and a negative electrode lead 21 connected to the negative electrode 12 by welding or the like.

Details being mentioned later, the cylindrical battery 10 includes the plurality of positive electrode leads. The plurality of positive electrode leads include a main lead 20a and two or more subleads 20b and 20c. The main lead 20a is connected to the housing can 16 or the sealing assembly 17, and the subleads 20b and 20c are connected to the main lead 20a at a position separate from a connected portion of the main lead 20a and either the housing can 16 or the sealing assembly 17. **In** the present embodiment, the main lead 20a is connected to the sealing assembly 17, and upon occurrence of abnormality, the main lead 20a is fused and electric connection between the positive electrode 11 and the sealing assembly 17 is disconnected.

The positive electrode 11 has a positive electrode core and positive electrode mixture layers arranged on the positive electrode core. For the positive electrode core, there can be used foil of a metal, such as aluminum, an aluminum alloy, stainless steel, and titanium, which is stable in the potential range of the positive electrode 11, a film having the metal disposed on its surface layers, and the like. The positive electrode mixture layers include a positive electrode active material, a conductive agent, and a binder agent, and are preferably provided on both surfaces of the positive electrode core except its portions where the positive electrode leads are connected. For the positive electrode active material, there is used a lithium transition metal composite oxide containing transition metal elements, such as Ni, Co, and Mn.

The negative electrode 12 has a negative electrode core and negative electrode mixture layers arranged on the negative electrode core. For the negative electrode core, there can be used foil of a metal, such as copper, copper alloy, stainless steel, nickel, and nickel alloy, which is stable in the potential range of the negative electrode 12, a film having the metal disposed on its surfaces, and the like. The negative electrode mixture layers include a negative electrode active material and a binder agent, and are preferably provided on both surfaces of the negative electrode core except its portion where the negative electrode lead 21 is connected. For the negative electrode active material, there is used in general a carbon material that reversibly stores and releases lithium ions. For the negative electrode active material, there may be used an element, such as Si and Sn, which is alloyed with Li, a material containing the element, and the like.

For the separators 13, porous sheets having ion permeability and insulation ability are used. Specific examples of the porous sheets include a microporous thin film, woven fabric, and nonwoven fabric. As a material of the separators 13, there are preferably used polyolefins such as polyethylene and polypropylene, cellulose, and the like. The separators 13 each may have a single layer structure or may have a multilayer structure. For example, the separators 13 each may have a multilayer structure including a thermoplastic resin layer, such as polyolefin, and a cellulose fiber layer, a two-layer structure of polyethylene (PE)/polypropylene (PP), or a three-layer structure of PE/PP/PE.

The electrolyte may be an aqueous electrolyte, but in the present embodiment, a non-aqueous electrolyte is used. The non-aqueous electrolyte has lithium ion conductivity. The non-aqueous electrolyte may be a liquid electrolyte (electrolytic solution) or may be a solid electrolyte.

The liquid electrolyte (electrolytic solution) includes a non-aqueous solvent and an electrolyte salt dissolved in the non-aqueous solvent. For the non-aqueous solvent, for example, there are used esters, ethers, nitriles, amides, mixed solvents of two kinds or more of these, and the like. Examples of the non-aqueous solvent include ethylene carbonate (EC), ethyl methyl carbonate (EMC), dimethyl carbonate (DMC), diethyl carbonate (DEC), and mixed solvents of these. The non-aqueous solvent may contain a halogen-substituted product (such as fluoroethylene carbonate) having halogen atom(s), such as fluorine, substituted for at least part of hydrogens of these solvents. For the electrolyte salt, for example, a lithium salt, such as LiPF₆, is used.

As the solid electrolyte, for example, a solid or gelatinous polymer electrolyte, an inorganic solid electrolyte, or the like can be used. For the inorganic solid electrolyte, there can be used materials known for all-solid-state lithium ion secondary batteries and the like (such as oxide-based solid electrolytes, sulfide-based solid electrolytes, and halogen-based solid electrolytes). For example, the polymer electrolyte includes the lithium salt and a matrix polymer, or includes the non-aqueous solvent, the lithium salt, and the matrix polymer. As the matrix polymer, for example, there is used a polymer material that absorbs the non-aqueous solvent and becomes gelatinous. Examples of the polymer material include fluorine resin, acrylic resin, and polyether resin.

Insulating plates 18 and 19 are arranged on and under the electrode assembly 14, respectively. In the example shown in FIG. 1, the positive electrode leads extend through through-holes of the insulating plate 18 to the sealing assembly 17 side, and the negative electrode lead 21 extends across the outside of the insulating plate 19 to the bottom side of the housing can 16. The main lead 20a of the plurality of positive electrode leads is connected to a lower surface of an internal terminal plate 23 of the sealing assembly 17 by welding or the like, and a cap 27 which is a top plate of the sealing assembly 17 electrically connected to the internal terminal plate 23 works as a positive electrode terminal. The negative electrode lead 21 is connected to a bottom inner surface of the housing can 16 by welding or the like, and the housing can 16 works as a negative electrode terminal. For example, the housing can 16 and the sealing assembly 17 are connected to an external circuit, such as another battery constituting a battery module or a charger.

The housing can 16 is a bottomed cylindrical metal-made container one side of which in an axial direction opens, this opening portion of the housing can 16 is closed by the sealing assembly 17. A gasket 28 is provided between the housing can 16 and the sealing assembly 17, and a sealing property inside the battery is secured. On the housing can 16, there is formed a grooved portion 22 a part of a side surface portion of which projects inward and that supports the sealing assembly 17. The grooved portion 22 is preferably formed into a ring shape along a circumferential direction of the housing can 16, and its upper surface supports the sealing assembly 17. The sealing assembly 17 is fixed to an upper portion of the housing can 16 with the grooved portion 22 and an opening end portion of the housing can 16, the opening end portion being crimped onto the sealing assembly 17.

The sealing assembly 17 has a structure in which the internal terminal plate 23, a lower vent member 24, an insulating member 25, an upper vent member 26, and the cap 27 are stacked in the order from the electrode assembly 14 side. The members constituting the sealing assembly 17 each have, for example, a disc shape or a ring shape, and these members except the insulating member 25 are electrically connected to one another. The lower vent member 24 and the upper vent member 26 are connected at their center portions, and the insulating member 25 is interposed between their peripheral edges. When an internal pressure of the battery rises due to abnormal heat generation, the lower vent member 24 is deformed so as to press the upper vent member 26 upward to the cap 27 side and ruptures thereby to disconnect a current path between the lower vent member 24 and the upper vent member 26. When the internal pressure further rises, the upper vent member 26 ruptures, and gas is discharged from an opening portion of the cap 27.

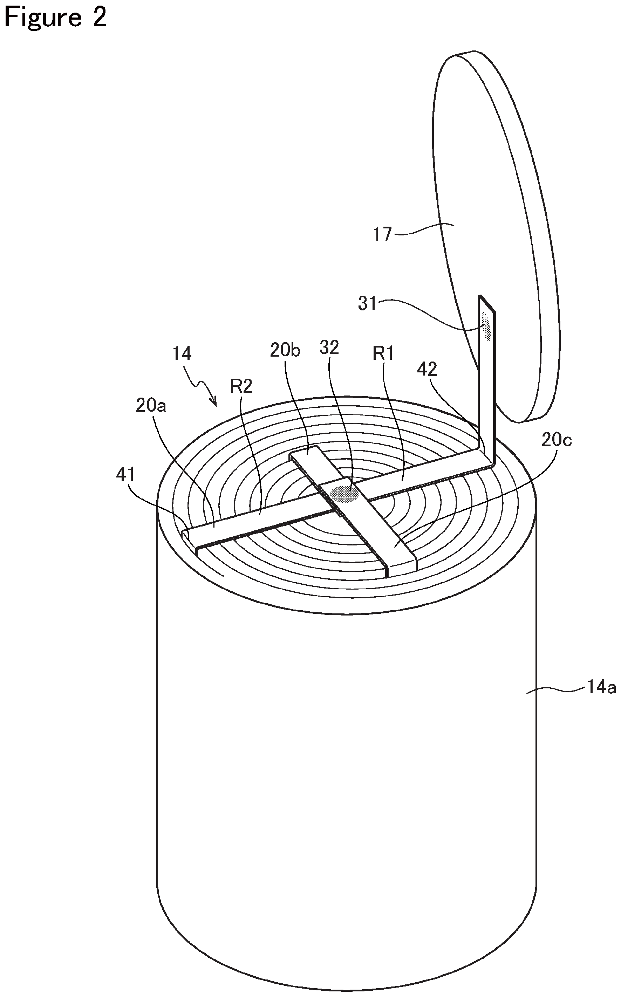

Hereafter, additionally with reference to FIG. 2, a configuration of the electrode assembly 14, in particular, configurations of the positive electrode leads are described. FIG. 2 is a perspective view of the electrode assembly 14.

As shown in FIG. 1 and FIG. 2, the electrode assembly 14 includes as the positive electrode leads connected to the positive electrode 11 one main lead 20a and two subleads 20b and 20c. The positive electrode leads extend from an upper end of an electrode group 14a constituting the electrode assembly 14 in the direction toward the sealing assembly 17, and the main lead 20a is connected to the internal terminal plate 23 of the sealing assembly 17. Notably, the electrode group 14a means a wound body constituted of the positive electrode 11, the negative electrode 12, and the separators 13, and a hollow portion 29 is formed in its winding core. In the cylindrical battery 10, only the one main lead 20a is directly connected to the sealing assembly 17. The subleads 20b and 20c are electrically connected to the sealing assembly 17 via the main lead 20a.

The subleads 20b and 20c are not directly connected to the sealing assembly 17, and are connected to the main lead 20a at a position separate from the connected portion of the main lead 20a and the sealing assembly 17. In the present embodiment, the main lead 20a is welded to the internal terminal plate 23 of the sealing assembly 17, and the subleads 20b and 20c are welded to the main lead 20a. Details being mentioned later, a second welding portion 32 which is the connected portion of the main lead 20a and the subleads 20b and 20c is separate from a first welding portion 31 which is the connected portion of the main lead 20a and the sealing assembly 17, and is formed above the hollow portion 29 of the electrode group 14a.

Between the first welded portion 31 of the main lead 20a and the sealing assembly 17 and the second welded portion 32 of the main lead 20a and the subleads 20b and 20c, a current path is formed only with the main lead 20a. Notably, a portion, of the main lead 20a, that is positioned between the welded portions 31 and 32 is set to a first region R1, and a portion, of the main lead 20a, that is positioned more on the positive electrode 11 side than the welded portion 32 is set to a second region R2.

Supposing a case where an external short circuit occurs in the state of charging of the cylindrical battery 10, a flow of short circuit current is divided in the plurality of positive electrode leads, and since the flow of short circuit current is divided on the positive electrode 11 side of the welded portion 31, a large current results in being applied to the first region R1 of the main lead 20a. Thereby, the first region R1 of the main lead 20a generates heat and is fused, and electric connection of the positive electrode 11 and the sealing assembly 17 is disconnected. The cylindrical battery 10 comprises the plurality of positive electrode leads and has a structure in which the flow of short circuit current is divided, providing the portion (first region R1) at which the short circuit current concentrates on the positive electrode lead allows electric connection of the electrode assembly 14 and the external circuit to be quickly disconnected upon occurrence of abnormality, and heat generation of the electrode assembly 14 is effectively restrained.

The main lead 20a and the subleads 20b and 20c each are a strip-shaped conductive member and, for example, constituted of a metal a main component of which is aluminum. A structure material of the positive electrode leads is preferably an aluminum alloy. The aluminum alloy is an alloy to which one kind or more of other metal elements, such as copper, manganese, silicon, magnesium, zinc, and nickel, are added, and an electric resistance, hardness, and the like of the material can be varied by adjusting the kind(s) and amount(s) of the added element(s). The main lead 20a and the subleads 20b and 20c may be constituted of the same material or may be constituted of different materials.

When the main lead 20a and the subleads 20b and 20c are constituted of different materials, the main lead 20a is constituted, for example, of a material having a higher electric resistance than the subleads 20b and 20c. By making the electric resistance of the main lead 20a higher than electric resistances of the subleads 20b and 20c, the first region R1 of the main lead 20a can be more easily fused when a large current is applied upon occurrence of abnormality in the battery, and the current path to the external circuit can be more quickly disconnected. Notably, the subleads 20b and 20c are preferably constituted of the same material.

Examples of a method of making the electric resistance of the main lead 20a > the electric resistances of the subleads 20b and 20c include making an aluminum purity in the aluminum alloy constituting the main lead 20a lower than an aluminum purity in the aluminum alloy constituting the subleads 20b and 20c. For example, the electric resistance of the main lead 20a is adjusted to be greater than or equal to 1.1 times and less than or equal to 3.0 times the electric resistance of the sublead 20b, 20c or to be greater than or equal to 1.2 times and less than or equal to 2.0 times. In this case, quick disconnection of the current path can be realized upon occurrence of abnormality while heat generation of the main lead 20a in normal use of the battery being restrained.

When the main lead 20a and the subleads 20b and 20c are constituted of different materials, for example, the main lead 20a is constituted of a material having higher hardness than the subleads 20b and 20c. Since the main lead 20a has the subleads 20b and 20c welded to itself and as mentioned later has many bent portions, it preferably has higher strength than the subleads 20b and 20c. The main lead 20a may have a higher electric resistance and higher hardness (higher strength) than the subleads 20b and 20c. Notably, the hardnesses of the positive electrode leads are measured by Vickers hardness measurement.

Examples of a method of making the hardness of the main lead 20a > the hardnesses of the subleads 20b and 20c include making the aluminum purity in the aluminum alloy constituting the main lead 20a lower than the aluminum purity in the aluminum alloy constituting the subleads 20b and 20c. In view of securing mechanical strength of the main lead 20a, for example, the hardness of the main lead 20a is adjusted to be greater than or equal to 1.1 times and less than or equal to 4.0 times the hardness of the sublead 20b, 20c or to be greater than or equal to 1.2 times and less than or equal to 3.0 times.

The positive electrode leads are welded to the core of the positive electrode 11. On the positive electrode 11, a plurality of core exposed portions in which the positive electrode mixture layers do not exist on the positive electrode core and surfaces of the positive electrode core are exposed are provided to be separate along a length direction of the positive electrode 11. The positive electrode leads are connected to the respective exposed portions one by one by welding or the like. A positive electrode lead is joined only onto one side of a positive electrode core in general, and core exposed portions are provided on both surfaces of the positive electrode 11. For example, the core exposed portions are formed to have substantially the same sizes so as to overlap in a thickness direction of the positive electrode 11. A welded position of the positive electrode lead in each exposed portion is not specially limited, and the positive electrode lead is arranged in a range of the core exposed portion so as not to overlap with the positive electrode mixture layer.

In the present embodiment, since the totally three positive electrode leads of the main lead 20a and the subleads 20b and 20c are provided, the core exposed portions are formed at three places separate along the length direction of the positive electrode 11. While intervals between these exposed portions may be fixed or may be different, the intervals between the core exposed portions are determined in accordance with a layout of the positive electrode leads, for example, since the layout is properly set in accordance with battery performance of the cylindrical battery 10, such as capacity and output characteristics. Notably, the number of the positive electrode leads only has to be greater than or equal to three and, for example, may be greater than or equal to four and less than or equal to 15, or greater than or equal to six and less than or equal to 10. Although two or more main leads that are connected to the sealing assembly 17 may be provided, one main lead is preferably provided in view of quick disconnection of the current path.

The main lead 20a extends to the sealing assembly 17 side through a through-hole of the insulating plate 18 and is bent so as to be along an upper surface of the insulating plate 18. Moreover, a tip portion of the main lead 20a is folded back so as to be along a lower surface of the internal terminal plate 23. In the present embodiment, the main lead 20a has a first bent portion 41 near the positive electrode 11, and has a second bent portion 42 near the sealing assembly 17. Moreover, the main lead 20a is arranged more on the outer circumferential side of the electrode assembly 14 than the subleads 20b and 20c, and has a larger length than the subleads 20b and 20c. While the subleads 20b and 20c each are bent so as to be along the upper surface of the insulating plate 18, tip portions of them are not folded back as with the main lead 20a.

On the main lead 20a, the first welded portion 31 to the sealing assembly 17 is formed more on the tip side than the second bent portion 42, and the second welded portion 32 to the subleads 20b and 20c is formed between the bent portions 41 and 42. Notably, while the second welded portion 32 is formed at one place, the subleads 20b and 20c can be welded at respective different places on the main lead 20a. Note that, also in this case, the resulting welded portions are formed such that the welded portion 31 to the sealing assembly 17 is not in contact with the welded portion 32 to the subleads 20b and 20c. For example, the first region R1 of the main lead 20a has a length greater than or equal to 10% of the length of the portion that extends from the electrode group 14a.

As mentioned above, the electrode assembly 14 has the hollow portion 29 formed in the winding core. The hollow portion 29 is a space extending in the axial direction of the electrode group 14a. For example, the welded portion 32 of the subleads 20b and 20c to the main lead 20a is positioned above the hollow portion 29 of the electrode group 14a. Namely, the hollow portion 29 and the welded portion 32 overlap in the axial direction of the electrode assembly 14. In this case, a jig used for the welding can be inserted into the hollow portion 29 to form the welded portion 32. Consequently, the excellent welded portion 32 can be easily formed, and reliability of the welded portion 32 is improved. For example, in plan view of the electrode assembly 14, the whole area of the welded portion 32 overlaps with the hollow portion 29 or at least part thereof overlaps with the hollow portion 29.

The subleads 20b and 20c are welded in the state where they are arranged above on the main lead 20a. Namely, at the welded portion 32, the subleads 20b and 20c are arranged more on the sealing assembly 17 side than the main lead 20a. In this case, the welding is easy, and reliability of the welded portion 32 is improved. In the present embodiment, at the welded portion 32, the sublead 20b is arranged on the main lead 20a, and the sublead 20c is arranged on the sublead 20b. When the width of the sublead 20b is, for example, approximately equal to those of the subleads 20b and 20c, the subleads 20b and 20c are preferably overlapped and welded in view of stability of the welding and the like.

In the present embodiment, while all of the positive electrode leads have substantially the same widths, the width of the main lead and those of the subleads may be different as mentioned later. Notably, the subleads preferably have substantially the same widths. For example, when the width of the main lead 20a is large, the sublead 20c may be directly arranged on the main lead 20a without being overlapped on the sublead 20b, and one welded portion 32 may be formed that includes the tip portions of the subleads 20b and 20c.

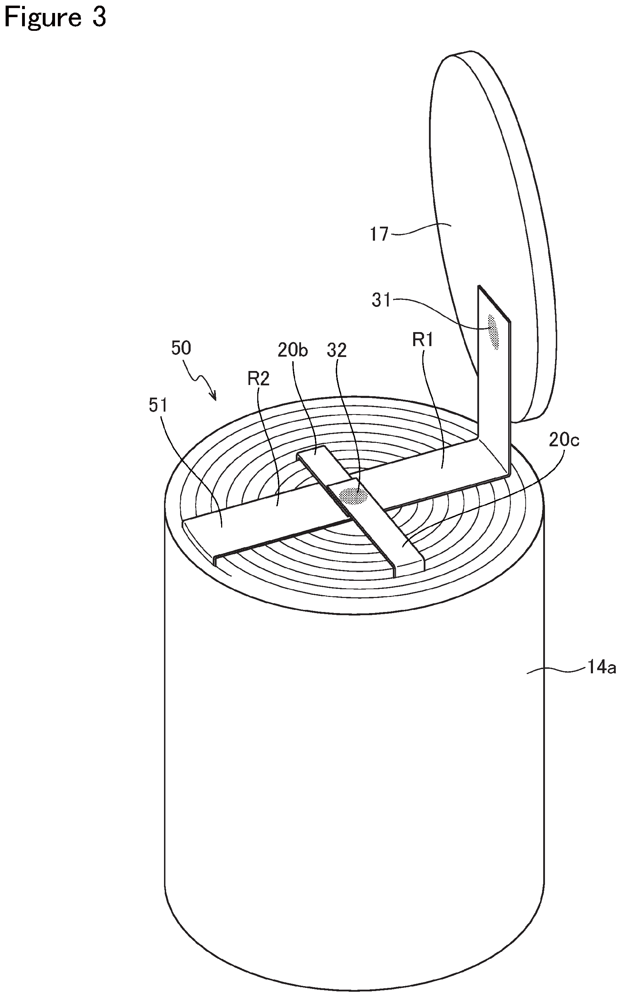

Hereafter, other examples of the embodiments are described with reference to FIG. 3 to FIG. 6. Hereafter, the same signs are used for the similar configurations to those in the aforementioned embodiment, and their duplicate description is omitted. Notably, in all of the embodiments, the configurations other than those of the positive electrode leads are similar to one another.

An electrode assembly 50 exemplarily shown in FIG. 3 is different from the electrode assembly 14 in that a width-directional sectional area of a main lead 51 is larger than width-directional sectional areas of the subleads 20b and 20c. In this case, heat generation of the main lead 51 in normal use of the battery can be restrained. As to the main lead 51, while its width-directional sectional area can be made larger by making its thickness larger than those of the subleads 20b and 20c, the width-directional sectional area is preferably made larger by making its width larger. By using the main lead 51 that is wider than the subleads 20b and 20c, in addition to restraining heat generation in normal use, welding of the subleads 20b and 20c is made easier, and reliability of the welded portion 32 is improved.

For example, the width of the main lead 51 is greater than or equal to 1.2 times and less than or equal to 4.0 times the width of the sublead 20b, 20c, greater than or equal to 1.3 times and less than or equal to 3.0 times, or greater than or equal to 1.4 times and less than or equal to 2.0 times. When the ratio of the width of the main lead 51 relative to the width of the sublead 20b, 20c is within the above range, quick disconnection of the current path can be realized upon occurrence of abnormality while the aforementioned effect in normal use of the battery being secured. Notably, while preferred widths of the electrode leads vary depending on the battery capacity, dimensions, and/or the like, an example thereof is greater than or equal to 3 mm and less than or equal to 25 mm.

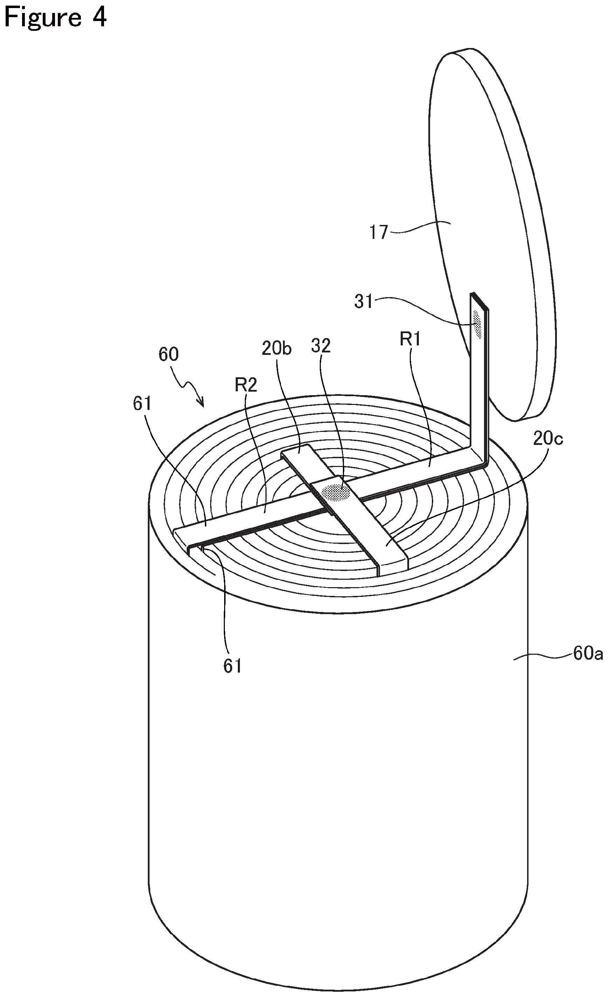

An electrode assembly 60 exemplarily shown in FIG. 4 is different from the electrode assembly 14 in that two main leads 61 are included and the main leads 61 are disposed to be superimposed. In this case, mechanical strength of the main leads 61 is improved, and since the width-directional sectional area of the main leads 61 is larger than the width-directional sectional areas of the subleads 20b and 20c, the similar effect to that in the case of the electrode assembly 50 can be obtained. In the example shown in FIG. 4, the two main leads 61 extend from respective positions that are separate in the radial direction of an electrode group 60a and line up in the radial direction thereof. Notably, the two main leads 61 can also be connected respectively onto the front side and the rear side of the one positive electrode core such that the core is interposed between those.

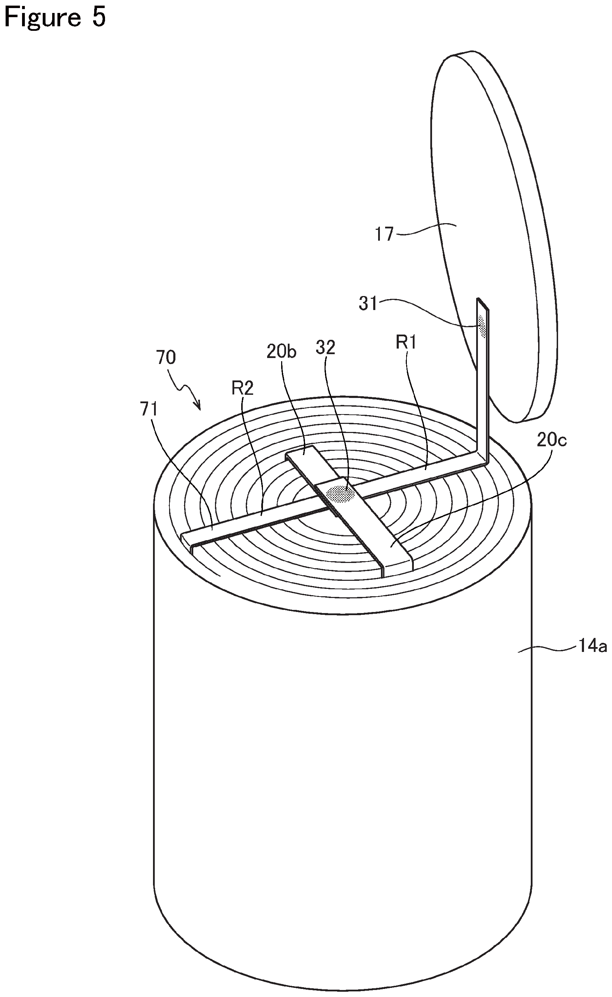

An electrode assembly 70 exemplarily shown in FIG. 5 is different from the electrode assembly 14 in that a width-directional sectional area of a main lead 71 is smaller than the width-directional sectional areas of the subleads 20b and 20c. In this case, upon occurrence of abnormality in the battery, quicker disconnection of the current path can be realized. As to the main lead 71, while its width-directional sectional area can be made smaller by making its thickness smaller than those of the subleads 20b and 20c, the width-directional sectional area is made smaller by making the width smaller in the example shown in FIG. 5.

For example, the width of the main lead 71 is greater than or equal to 0.50 times and less than or equal to 0.95 times the width of the sublead 20b, 20c, greater than or equal to 0.60 times and less than or equal to 0.90 times, or greater than or equal to 0.70 times and less than or equal to 0.90 times. The ratio of the width of the main lead 71 relative to the width of the sublead 20b, 20c is determined in consideration of stability in welding of the subleads 20b and 20c, restraining heat generation of the main lead 71 in normal use, quick fusing of the main lead 71 upon occurrence of abnormality, and the like.

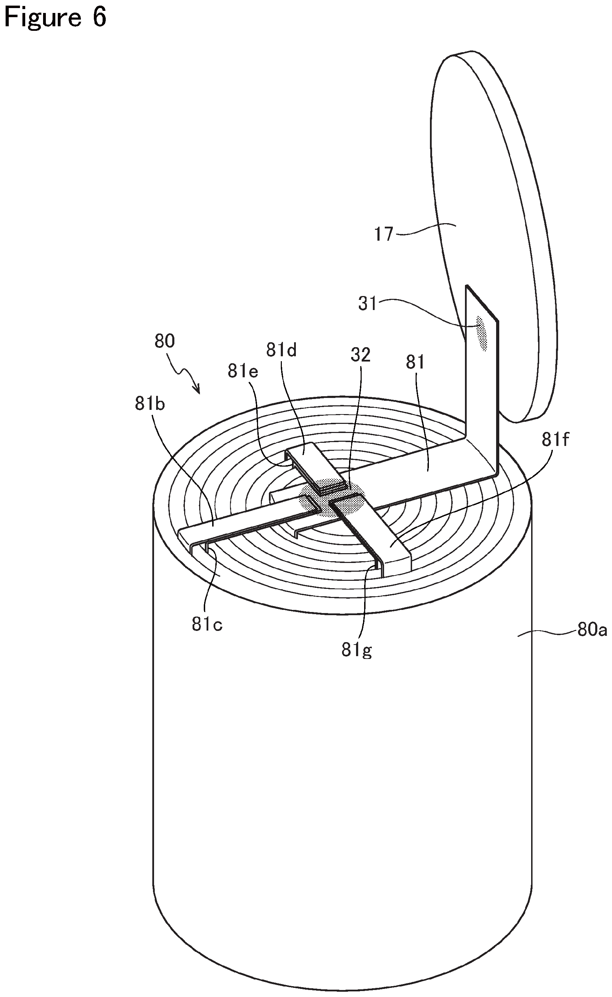

An electrode assembly 80 exemplarily shown in FIG. 6 is different from the electrode assembly 14 in that six subleads 81b to 81g are included and a main lead 81a is wider than the subleads 81b to 81g. The six subleads 81b to 81g substantially have the same widths. While the electrode assembly 80 includes the totally seven positive electrode leads, the number of the positive electrode leads may be greater than or equal to eight as mentioned above. Moreover, the main lead 81a extends from a portion, of an electrode group 80a, that is more on the inner side in the radial direction than the subleads 81b to 81g.

As in the case of the electrode assembly 50, the width of the main lead 81a is, for example, greater than or equal to 1.2 times and less than or equal to 4.0 times the width of the sublead 81b to 81g, greater than or equal to 1.3 times and less than or equal to 3.0 times, or greater than or equal to 1.4 times and less than or equal to 2.0 times. In the example shown in FIG. 6, pairs of the six subleads 81b to 81g are arranged, each pair being overlapped with each other. The pairs of the subleads, each pair including two of those, are closely arranged not to overlap on the main lead 81a, and are connected to the main lead 81a with one welded portion 32 formed above the hollow portion 29 of the electrode group 80a.

While each pair of subleads mentioned above can also be connected respectively onto the front side and the rear side of the one positive electrode core such that the core is interposed between those, as shown in FIG. 6, those two subleads preferably extend from respective positions that are separate in the radial direction of the electrode group 80a and line up in the radial direction thereof.

As above, the cylindrical batteries of the aforementioned embodiments each comprise the electrode assembly including the plurality of positive electrode leads, and hence, have excellent output characteristics in normal use. Meanwhile, according to the cylindrical batteries of the aforementioned embodiments, the first region of the main lead generates heat and is fused upon occurrence of abnormality, and electric connection of the electrode assembly and the external circuit is quickly disconnected. Consequently, heat generation of the electrode assembly upon occurrence of abnormality is effectively restrained.

Notably, design of the aforementioned embodiments can be properly changed in such a range that the object of the present disclosure is not impaired, and the constituents of the aforementioned embodiments may be selectively combined into an embodiment. For example, in the embodiment exemplarily shown in FIG. 6, the width of the main lead may be the same as the widths of the subleads, and otherwise, two main leads may be used as in the embodiment exemplarily shown in FIG. 4.

The present disclosure is further described with the following embodiments.

Configuration 1: A cylindrical battery, comprising: a winding-type electrode assembly; a bottomed cylindrical housing can that contains the electrode assembly; and a sealing assembly that closes an opening portion of the housing can, the cylindrical battery including a plurality of positive electrode leads connected to a positive electrode of the electrode assembly, wherein the plurality of positive electrode leads include a main lead and two or more subleads, the main lead is connected to the sealing assembly, and the subleads are connected to the main lead at a position separate from a connected portion of the main lead and the sealing assembly.

Configuration 2: The cylindrical battery according to the configuration 1, wherein a width-directional sectional area of the main lead is larger than a width-directional sectional area of the sublead.

Configuration 3: The cylindrical battery according to the configuration 1, wherein a width-directional sectional area of the main lead is smaller than a width-directional sectional area of the sublead.

Configuration 4: The cylindrical battery according to any one of the configurations 1 to 3, wherein the main lead has a higher electric resistance than the sublead.

Configuration 5: The cylindrical battery according to any one of the configurations 1 to 4, wherein the main lead has higher hardness than the sublead.

Configuration 6: The cylindrical battery according to any one of the configurations 1 to 5, wherein the electrode assembly has a hollow portion formed in a winding core, and a connected portion of the sublead to the main lead is positioned above the hollow portion.

Configuration 7: The cylindrical battery according to any one of claims 1 to 6, wherein the main lead is connected to the sealing assembly, and at a connected portion of the sublead to the main lead, the sublead is arranged more on the sealing assembly side than the main lead.

### REFERENCE SIGNS LIST

10 Cylindrical battery, 11 Positive electrode, 12 Negative electrode, 13 Separator, 14 Electrode assembly, 14a Electrode group, 16 Housing can, 17 Sealing assembly, 18, 19 Insulating plate, 20a Main lead, 20b, 20c Sublead, 21 Negative electrode lead, 22 Grooved portion, 23 Internal terminal plate, 24 Lower vent member, 25 Insulating member, 26 Upper vent member, 27 Cap, 28 Gasket, 29 Hollow portion, 31, 32 Welded portion, 41, 42 Bent portion, R1 First region, R2 Second region

## Claims

1. A cylindrical battery, comprising:
a winding-type electrode assembly;
a bottomed cylindrical housing can that contains the electrode assembly; and
a sealing assembly that closes an opening portion of the housing can, the cylindrical battery including
a plurality of positive electrode leads connected to a positive electrode of the electrode assembly, wherein
the plurality of positive electrode leads include a main lead and two or more subleads,
the main lead is connected to the sealing assembly, and
the subleads are connected to the main lead at a position separate from a connected portion of the main lead and the sealing assembly.

2. The cylindrical battery according to claim 1, wherein a width-directional sectional area of the main lead is larger than a width-directional sectional area of the sublead.

3. The cylindrical battery according to claim 1, wherein a width-directional sectional area of the main lead is smaller than a width-directional sectional area of the sublead.

4. The cylindrical battery according to any one of claims 1 to 3, wherein the main lead has a higher electric resistance than the sublead.

5. The cylindrical battery according to any one of claims 1 to 3, wherein the main lead has higher hardness than the sublead.

6. The cylindrical battery according to any one of claims 1 to 3, wherein
the electrode assembly has a hollow portion formed in a winding core, and
a connected portion of the sublead to the main lead is positioned above the hollow portion.

7. The cylindrical battery according to any one of claims 1 to 3, wherein
the main lead is connected to the sealing assembly, and
at a connected portion of the sublead to the main lead, the sublead is arranged more on the sealing assembly side than the main lead.
